# EUROPÄISCHE PATENTSCHRIFT

(11) **EP 1 754 906 B1**
(45) Veröffentlichungstag und Bekanntmachung des Hinweises auf die Patenterteilung: **23.11.2011**
(21) Anmeldenummer: 06015302.0
(22) Anmeldetag: 22.07.2006
(51) Int. Cl.: F16D 25/08

(54) **Anbindung eines Zentralausrückers an eine Kupplung**
Fastening of a central release device to a clutch
Montage d'un dispositif central de débrayage sur un embrayage

(30) Priorität: 20.08.2005 DE 102005039389
(43) Veröffentlichungstag der Anmeldung: 21.02.2007
(73) Patentinhaber: Schaeffler Technologies GmbH & Co. KG, 91074 Herzogenaurach (DE)
(72) Erfinder: Heitbaum, Markus, 77830 Bühlertal (DE); Panther, Urban, 77960 Seelbach (DE); Littlefair, Greig, 77815 Bühl (DE)

(56) Entgegenhaltungen:
- DE-A1- 10 138 722
- FR-A1- 2 539 473
- FR-A1- 2 745 616

## Beschreibung

Die vorliegende Erfindung betrifft eine Anbindung eines als Zentralausrücker ausgebildeten Nehmerzylinders an eine Kupplung bzw. einen Gehäusedeckel einer Kupplung gemäß dem Oberbegriff des Anspruchs 1 sowie dessen Montage und Demontage gemäß der Ansprüche 15 und 16.

Ein um die Getriebeeingangswelle angeordneter Nehmerzylinder ist beispielsweise aus der DE 44 27 942 bekannt. Ein derartiger Nehmerzylinder weist ein Gehäuse auf, das mittels Befestigungsmitteln an einem Getriebegehäuse oder einer Kupplungsglocke aufgenommen ist. Dies bedeutet, dass zur Montage von Kupplung und Getriebe zuvor die Kupplung an der Antriebswelle bzw. der Kurbelwelle und der Zentralausrücker an der Getriebeseite befestigt wird und erst bei der Endmontage des Antriebsstranges beide Komponenten miteinander kombiniert werden.

Eine montagegünstigere Lösung ist aus der DE 101 38 722 bekannt, die ein deckelfestes System offenbart, bei dem der Zentralausrücker an einem Gehäusedeckel der Kupplung angeordnet ist und mittels eines zusätzlichen Lagers diesem gegenüber drehbar angeordnet ist, so dass der eigentliche Zentralausrücker wiederum drehfest gegenüber der Kupplungsglocke bzw. dem Getriebegehäuse gelagert ist. Die vom Zentralausrücker abgehende hydraulische Zuleitung, die durch die Kupplungsglocke geführt wird, dient gleichzeitig ais Verdrehsicherung für den Zentralausrücker. Ein Außenring ist mit einem Wälzlager für die drehbare Aufnahme des Zentralausrückers versehen. Zur Montage des Zentralausrückers in der Kupplungsglocke wird der Außenring des Zentralausrückers mit der Kupplungsglocke mittels Bajonettverschluss verbunden.

Diese aufgeführten Anordnungen nach dem Stand der Technik erfordern relativ aufwendige Montagetätigkeiten für die Montage und Demontage eines Zentralausrückers an einer Kupplung bzw. an einer Kupplungsglocke.

Aufgabe der vorliegenden Erfindung ist es daher unter Beachtung geringer Bauraumverhältnisse, eine einfache und kostengünstige Montage und Demontage des Außenrings des Zentralausrückers mit dem Deckel des Kupplungsgehäuses und damit des Zentralausrückers an der Kupplung durchführen zu können.

Diese Anbindung eines Zentralausrückers an eine Kupplung bzw. einen Gehäusedeckel einer Kupplung, bestehend aus einem drehbaren Außenring eines am Zentralausrücker angeordneten Lagers, und einem Gehäusedeckel, bei dem Außenring und Gehäusedeckel mittels bajonettartigem Verschluss miteinander verbunden sind, wird dadurch gelöst, dass in den Verschlussbereich beider zu verbindender Bauteile, Gehäusedeckel und Lagerdeckel, ein Sprengring eingefügt wird.

Bei der Montage des Zentralausrückers an den Gehäusedeckel fungiert der Sprengring motorseitig als axialer Anschlag zwischen Gehäusedeckel und Außenring. Der bajonettartig ausgebildete Verschlussbereich dagegen bildet den Anschlag zur Getriebeseite. Außerdem dient der Sprengring als Verdrehsicherung, um auf diese einfache Weise ein Verdrehen von Gehäusedeckel und Außenring gegeneinander auszuschließen. Durch das Einfügen eines zusätzlichen Teils, dem Sprengring, der auf einfache Weise, wie Stanzen aus einem Blech oder durch Biegen eines Drahtes herstellbar ist, in eine bajonettartige Verbindung, können einerseits die Kosten für die aufwendige Herstellung einer Bajonettverbindung gesenkt werden und andererseits ist über diesen Sprengring die Montage und Demontage auch bei geringen Platzverhältnissen sehr leicht möglich.

Besonders vorteilhaft ist es für eine einfache und gleichzeitig schnelle Montage, dass entweder der Gehäusedeckel oder der Außenring mit Ausbuchtungen in axialer Richtung und dazu entsprechend entweder der Gehäusedeckel oder der Außenring mit Ausbuchtungen oder Durchbrüchen in axialer Richtung versehen sind.

In einer bevorzugten Ausführungsform ist weiter vorgesehen, dass der Sprengring Mittel zur Verdrehsicherung gegenüber dem Gehäusedeckel umfasst. Durch die Integration dieser Funktion in den Sprengring kann auf zusätzliche Mittel zur Verdrehsicherung, z. B. Splinte, Schrauben, Rastnocken oder dergleichen, verzichtet werden.

Der Sprengring kann einen im Wesentlichen rechteckigen Querschnitt aufweisen, dessen größte Ausdehnung sich in radialer Richtung erstreckt. Dies entspricht der klassischen Geometrie eines Sprengringes, wodurch dieser eine relativ hohe radiale Druckkraft aufbringen kann, was die Haltekraft in Einbaulage erhöht, und wodurch dieser, wie oben bereits erwähnt, leicht als Stanzteil aus einem Blech gefertigt werden kann.

Vorzugsweise sind die Mittel zur Verdrehsicherung Nasen an dem Sprengring. Dabei sind die Nasen vorzugsweise im Wesentlichen in radialer Richtung nach außen zeigend an dem Sprengring angeordnet sind. Der Sprengring ist vorzugsweise in einer Ringnut des Gehäusedeckels angeordnet.

In einer bevorzugten Alternative weist der Sprengring einen in etwa kreisförmigen Querschnitt auf. Vorzugsweise ist dabei vorgesehen, dass die Mittel zur Verdrehsicherung Ausbuchtungen an dem Sprengring sind. Der Sprengring kann dadurch aus einem Draht gebogen werden, was, wie oben bereits erwähnt, die Herstellungskosten erheblich verringert.

In einer bevorzugten Ausführungsform ist vorgesehen, dass die Nasen oder Ausbuchtungen in Ausnehmungen oder Durchbrüche des Gehäusedeckels eingreifen. Der Sprengring wird dadurch gegen Verdrehung gesichert.

In der bevorzugten Ausführungsform ist weiter vorgesehen, dass der Sprengring an einem Umfangsende eine L-förmige Abkantung aufweist. Die Abkantung bildet mit einem Vorsprung des Außenrings, der selbst Teil des Bajonettverschlusses ist, einen Schnappverschluss. In der bevorzugten Ausführungsform ist des Weiteren vorgesehen, dass der Sprengring an einem Umfangsende eine Auskantung aufweist. Dabei ist vorzugsweise vorgesehen, dass die Auskantung des Sprengringes in Einbaulage eine Kante eines Vorsprunges des Außenrings hintergreift.

Das eingangs genannte Problem wird weiterhin durch ein Verfahren zur Montage der erfindungsgemäßen Anordnung gelöst, in dem der Sprengring in eine Ringnut einer Aufnahmeöffnung des Gehäusedeckels eingebracht wird und damit gleichzeitig als Anschlag in axialer Richtung für den Außenring des nachfolgend in diese Aufnahmeöffnung eingesetzten Zentralausrückers dient und anschließend Außenring und Gehäusedeckel gegeneinander in Umfangsrichtung verdreht werden, bis die Auskantung des Sprengringes die Kante eines Vorsprunges des Außenrings hintergreift. Der in den Gehäusedeckel eingesetzte Sprengring wird axial in der Ringnut gehalten. Zwei Einrasthaken, nämlich die L-förmige Abkantungen sowie die Auskantung, verhindern, dass der Zentralausrücker sich wieder zurückdreht und herausfallen kann. Der längere (die mit 2x90°-Biegungen versehene Auskantung) der beiden Einrasthaken dient dazu, den Zentralausrücker beispielsweise bei einem Werkstattaufenthalt wieder zu demontieren. Der Mechaniker drückt zur Demontage einfach z. B. mit einem spitzen Werkzeug, wie Schraubendreher, auf diesen Haken (Auskantung) in axialer Richtung und dreht den Zentralausrücker entgegen dem Uhrzeigersinn, so dass sich der Zentralausrücker leicht wieder herausnehmen lässt. So werden keine zusätzlichen Werkzeuge benötigt, und der Zentralausrücker ist auf einfache Art und Weise, auf kleinstem benötigenden Raum leicht von der Kupplung zu trennen und ebenso einfach wieder einzubauen.

Im Folgenden werden Ausführungsbeispiele der Erfindung anhand der beiliegenden Zeichnungen erläutert. Dabei zeigen:
- Fig. 1: eine schematische Darstellung eines Teils eines Antriebsstranges mit einer Kupplungsausrückvorrichtung;
- Fig. 2: einen deckelfesten Zentralausrücker zwischen Getriebegehäuse und Kupplung in einer vergrößerten Darstellung;
- Fig. 3: eine Explosionsdarstellung eines ersten Ausführungsbeispiels eines Gehäusedeckels, eines Sprengringes sowie eines Außenrings;
- Fig. 4: den Sprengring gemäß Fig. 3 in Einzeldarstellung;
- Fig. 5: eine Explosionsdarstellung eines zweiten Ausführungsbeispiels eines Ausschnitts eines Gehäusedeckels mit Befestigungslaschen, eines Sprengringes sowie eines Au- ßenrings;
- Fig. 6: den Sprengring gemäß Fig. 5 in Einzeldarstellung.

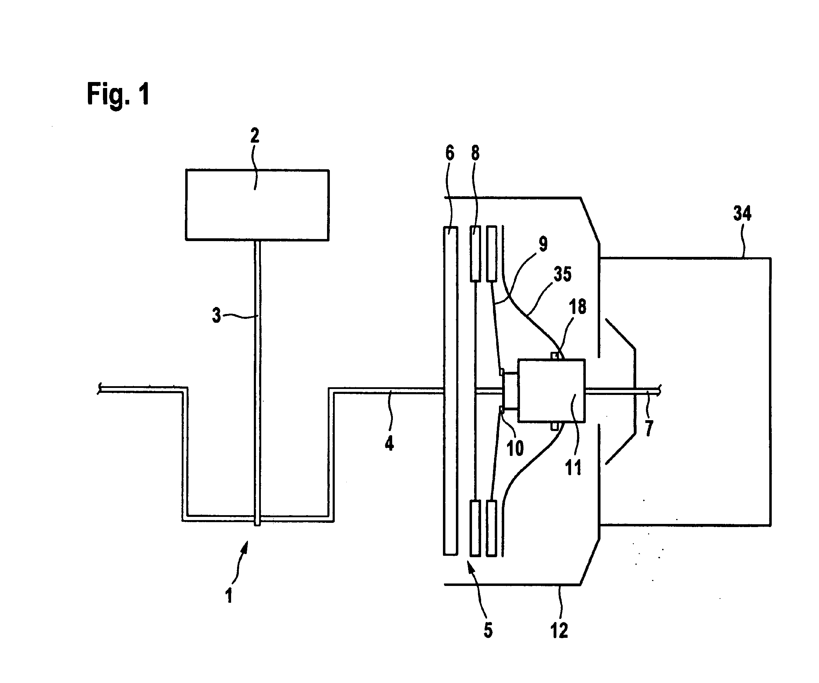

Fig. 1 zeigt eine schematische Darstellung eines Teils eines Antriebsstranges mit einer Kupplungsausrückvorrichtung. Schematisch dargestellt ist eine Brennkraftmaschine 1, bei der ein Kolben 2 über ein Pleuel 3 auf eine Kurbelwelle 4 wirkt. Diese Kurbelwelle 4 ist wiederum verbunden mit einer Fahrzeugkupplung 5. Die Fahrzeugkupplung 5 umfasst in an sich bekannter Weise eine fest mit der Kurbelwelle 4 verbundene Kupplungsscheibe 6 sowie eine drehfest mit einer Getriebeeingangswelle 7 verbundene Kupplungsscheibe 8, die über eine Tellerfeder 9 an die Kupplungsscheibe 6 angedrückt werden kann, um so im angedrückten und damit eingekuppelten Zustand ein Drehmoment übertragen zu können. Mit der Tellerfeder 9 steht ein Ausrücklager 10 eines als Zentralausrücker 11 ausgebildeten Nehmerzylinders in an sich bekannter Art in Wirkverbindung. Die Fahrzeugkupplung 5 sowie der Zentralausrücker 11 sind gemeinsam in einer Kupplungsglocke 12 angeordnet, wobei der Zentralausrücker 11 und die Kupplungsglocke 12, wie nachfolgend dargestellt, miteinander verbunden sind. An die Kupplungsglocke 12 ist ein Getriebe 34 angeflanscht.

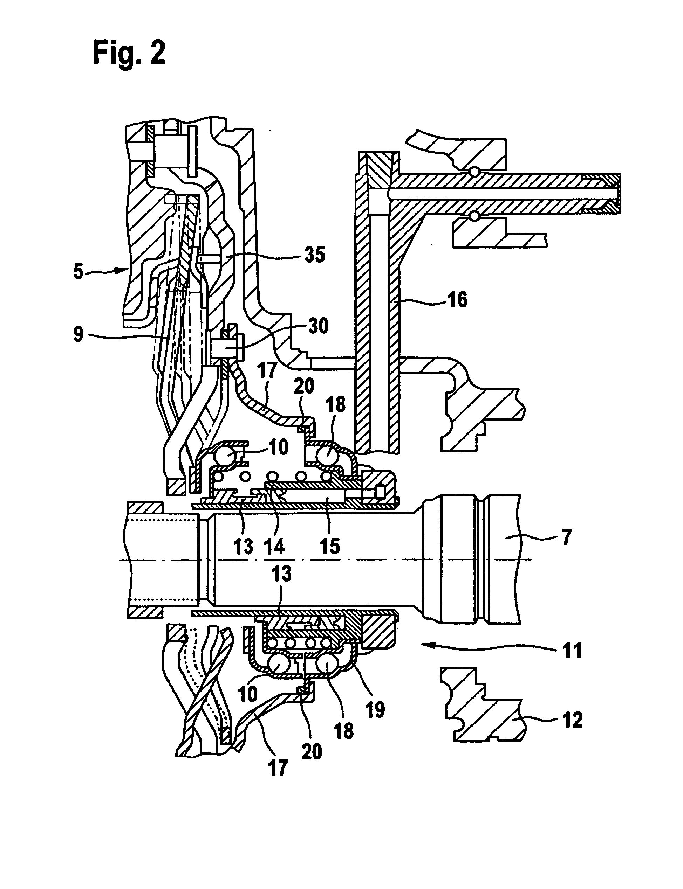

Figur 2 zeigt die erfindungsgemäße Anordnung eines Zentralausrückers 11 in einer vergrößerten Darstellung. Zu erkennen ist die Getriebeeingangswelle 7 sowie der koaxial zu dieser angeordnete Zentralausrücker 11. Der als Zentralausrücker 11 ausgebildete Nehmerzylinder umfasst einen Ringkolben 13, der in einem ringförmigen Zylindergehäuse 14 verschiebbar geführt ist. Das Gehäuse des Zentralausrückers 11 ist ortsfest angeordnet. Dies wird dadurch realisiert, indem endseitig am Zylindergehäuse 14 ein Lager 18 mit einem Außenring 19 vorgesehen ist. Dieser Außenring 19 wird so mit dem Gehäusedeckel 17 verbunden, dass zunächst eine bajonettartige Verbindung beider Bauteile stattfindet und nachfolgend zusätzlich in diese Verbindungsstelle ein Sprengring 20 eingesetzt wird, wird Mit Hilfe dieses Sprengrings 20 einerseits die Verbindung beider Bauteile realisiert. Allerdings dient er auch motorseitig in der Aufnahmeöffnung des Gehäusedeckels 17 als Anschlag für den Außenring 19 und weiterhin als Verdrehsicherung beider Bauteile gegeneinander.

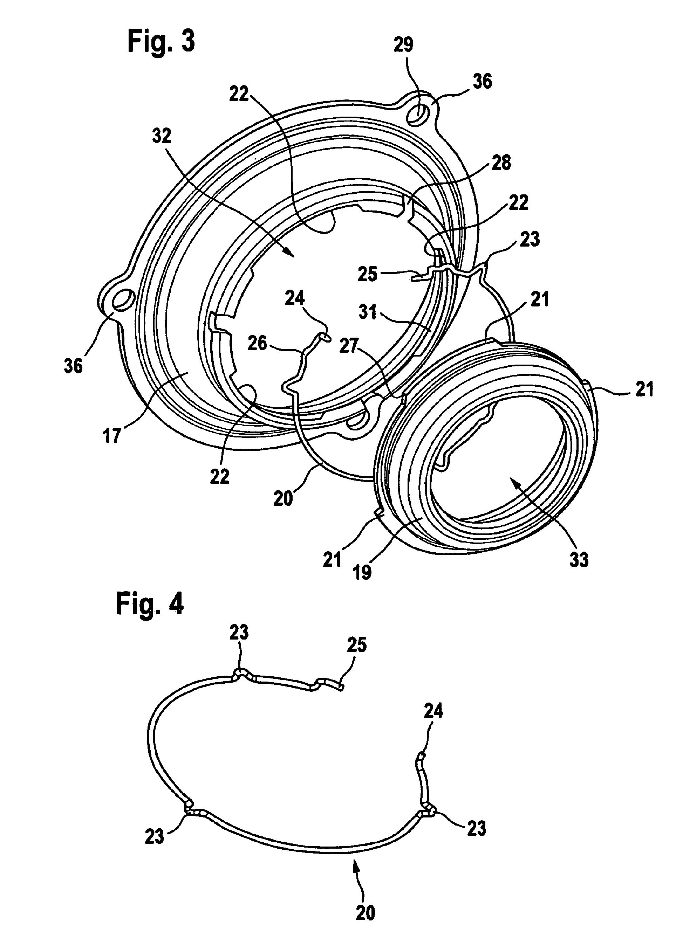

Mit Hilfe von mehreren Nieten, Schrauben oder Ähnlichem als Befestigungsmittel 30, die in die entsprechend vorgesehenen Bohrungen 29 der Befestigungslaschen 36 des Gehäusedeckels 17 (s. Figur 3) eingesetzt werden, ist wiederum der Gehäusedeckel 17 mit dem Kupplungsdeckel 35 verbunden. Somit ist der Zentralausrücker 11 über den Außenring 19 seines Lagers 18 am Gehäusedeckel 17 und über Befestigungsmittel 30 mit dem Kupplungsdeckel 35 befestigt. Allerdings kann der Kupplungsdeckel 35 geometrisch auch so ausgeführt werden, dass dadurch der Gehäusedeckel 17 als Adapter zwischen Kupplungsdeckel 35 und Außenring 19 des Lagers 18 entfällt.

Am anderen Ende des Zylindergehäuses 14 steht der darin geführte Ringkolben 13 mit dem Ausrücklager 10 in Verbindung, das wiederum zur Betätigung der Tellerfeder 9 dient. In der Figur 2 ist oberhalb der Mittellinie der Ringkolben 13 in seiner ausgerückten Endlage und damit die Fahrzeugkupplung 5 im ausgekuppelten Zustand dargestellt. Unterhalb der Mittellinie ist der Ringkolben 13 in seiner eingerückten Endlage dargestellt, bei der das Ausrücklager 10 vollständig von der Tellerfeder 9 abgehoben ist. Der nähere Aufbau der Fahrzeugkupplung 5 wird an dieser Stelle nicht näher beschrieben, da dieser an sich bekannt ist.

Zwischen dem ringförmig ausgebildeten Zylindergehäuse 14 des Zentralausrückers 11 und dem Ringkolben 13 bildet sich durch die unterschiedlichen Stellungen des Ringklobens 13 ein unterschiedlich großer ringförmiger Druckraum 15. Dieser Druckraum 15 ist mit einem Hydraulikanschluss 16 verbunden. Dieser Hydraulikanschluss verbindet über eine hydraulische Leitung den Zentralausrücker 11 mit einem hier nicht dargestellten Geberzylinder.

In Figur 2 sind außerdem Teile der Kupplungsglocke 12 dargestellt, die die Fahrzeugkupplung 5 und den Zentralausrücker 11 nach außen zumindest teilweise abdeckt und somit vor Verunreinigungen, äußeren Einwirkungen bzw. Beschädigungen schützt und außerdem eine Verbindung zwischen dem nicht dargestellten Motorblock und dem Gehäuse des Getriebes 34 herstellt.

Anhand der Figur 3 wird die Verbindung von Gehäusedeckel 17, Außenring 19 sowie Sprengring 20 erläutert. Diese Figur zeigt, ebenso wie Figur 4, einen Gehäusedeckel 17, einen Sprengring 20 sowie einen Außenring 19 in dreidimensionaler Explosionszeichnung. (In dieser Figur 3 und in Figur 4 wird der Sprengring 20 noch einmal einzeln in räumlicher Darstellung dargestellt, bei der er im Wesentlichen aus einem gebogenen Draht besteht). Der Gehäusedeckel 17 umfasst eine Aufnahmebohrung 32 mit einer umlaufenden Ringnut 31. Der Außenring 19 weist eine Aufnahmeöffnung 33 zur Aufnahme des Lagers 18 samt Zentralausrücker 11 auf. Gehäusedeckel 17 und Außenring 19 sind an ihrem Verschlussbereich so konstruktiv ausgebildet, dass sie bajonettartig miteinander verbunden werden können. So sind auf Seiten des Außenrings 19 in Umfangsrichtung verlaufende radial vorstehende Vorsprünge 21 vorgesehen, die auf Seiten des Gehäusedeckels 17 mit entsprechend in Umfangsrichtung verlaufenden Ausnehmungen 22 zusammenwirken. Die Ausnehmungen 22 gehen, wie bei einem Bajonettverschluss üblich, in hier nicht näher dargestellte in Umfangsrichtung verlaufende Ringnuten mit oder ohne Steigung über. In der Verdrehstellung des Außenrings 19 zum Gehäusedeckel 17, wie in Figur 3 dargestellt, lassen sich die Vorsprünge 21 durch die Ausnehmungen 22 schieben. Durch eine Drehung im Uhrzeigersinn werden Außenring 19 und Gehäusedeckels 17 gegeneinander verspannt, wobei die Vorsprünge 21 in die entsprechenden Nuten gedreht werden. Dazu können auch die Flächen der Vorsprünge 21 mit einer Steigung ähnlich einem Gewinde versehen sein. Die Vorsprünge 21 und die Ausnehmungen 22 sowie Nuten bilden somit einen bajonettartigen Verschluss für die Bauteile Gehäusedeckel 17 und Außenring 19. Der Sprengring 20 weist Vorteilhafterweise drei über seinen Umfang verteilte Ausbuchtungen 23 auf, die in entsprechend korrespondierende Ausnehmungen 28 des Gehäusedeckels 17 eingreifen. Diese Ausbuchtungen 23 in Verbindung mit den Ausnehmungen 28 verhindern ein Verdrehen des Sprengringes 20 gegenüber dem Gehäusedeckel 17. Der Sprengring 20 ist nicht geschlossen, erstreckt sich also nicht über 360° Kreisumfang, sondern ist an einer Stelle geöffnet. Dadurch werden zwei Enden gebildet, von denen ein Ende mit einer
L-förmigen Abkantung 24, das andere Ende mit einer Auskantung 25 versehen ist. Die Auskantung 25 wirkt, wie den Figuren 3 und 4 zu entnehmen ist, wie eine in axialer Richtung sich erstreckende Abkröpfung des Sprengringendes. Die Abkantung 24 wirkt wie ein um 90° in axialer Richtung gebogenes Ende. Zusätzlich sind über die Umfangsrichtung des Sprengringes 20 Abstandhalter 26 in Form kleinerer Ausbuchtungen angeordnet, von denen hier der Übersichtlichkeit halber stellvertretend nur eine bezeichnet ist,

Zur Montage des Zentralausrückers 11 an das Gehäuse 17 wird zunächst der Sprengring 20 in eine Ringnut 31 der Aufnahmeöffnung 32 in den Gehäusedeckel 17 eingelegt und sodann der Außenring 19 in axialer Richtung ebenfalls in die' Aufnahmeöffnung 32 des Gehäusedeckels 17 eingeführt. Der Sprengring 20 dient dabei motorseitig als Anschlag für den Außenring 19. Danach wird der Außenring 19 in Uhrzeigerrichtung verdreht, wodurch eine der radial verlaufenden Flächen der Vorsprünge 21 mit einer Kante 27 die Auskantung 25 in axialer Richtung (in der Darstellung der Figur 3 in Richtung der Zeichenebene) wegdrückt und bei Weiterdrehen durch die Kante 27 hintergriffen wird. Dadurch kann der Außenring 19 nicht mehr entgegen dem Uhrzeigersinn zurückgedreht werden, sodass auf diese Art und Weise mittels des Sprengringes 20 eine Schnappverbindung gebildet wird, die eine Rückdrehung des Außenrings 19 gegenüber dem Gehäusedeckel 17 verhindert. Eine weitere Drehung im Uhrzeigersinn wird beispielsweise durch die L-förmige Abkantung 24 oder eine an den Gehäusedeckel 17 angegossene Nase 23a oder dergleichen verhindert.

Für die Demontage des Zentralausrückers, beispielsweise bei einer Reparatur, sind lediglich folgende Schritte notwendig: Mit Hilfe eines spitzen Werkzeuges, wie Schraubendreher, Stifte oder ähnlichem, wird die Auskantung 25 des Sprengrings 20 in axialer Richtung so weit eingedrückt, bis dieser den Vorsprung 21 wieder verlassen hat. Nachdem der Außenring 19 gegenüber dem Gehäusedeckel 17 entgegen dem Uhrzeigersinn gedreht wurde, kann der Zentralausrücker 11 aus der Aufnahmeöffnung 32 des Gehäusedeckels 17 herausgezogen werden.

Aus der Figur 4 wird die Formgebung des Sprengrings 20 ersichtlich, dessen Umfang verteilt mehrere, vorzugsweise drei Nasen aufweist, die im eingebauten Zustand des Sprengrings 20 zur Verriegelung von Außenring 19 und Gehäusedeckel 17 dienen. Die am Ende des Sprengrings 20 vorgesehene Auskantung 25 dient als Betätigungsmittel für die Demontage des Zentralausrückers 11.

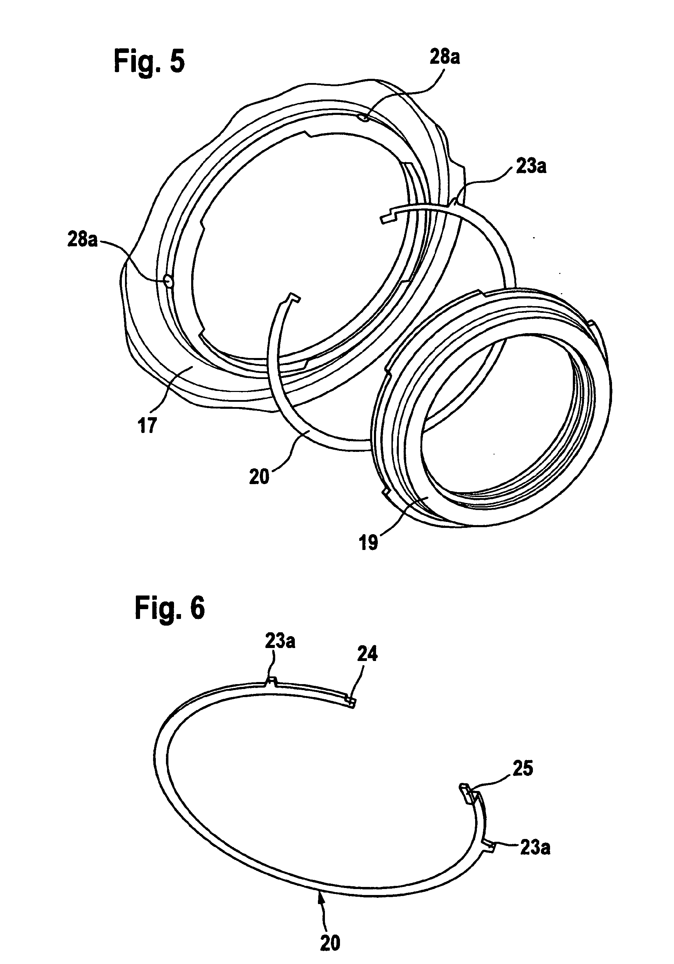

Die Figur 5 zeigt ebenfalls in einer räumlichen Explosionsdarstellung die Verbindung von Gehäusedeckel 17, Außenring 19 sowie Sprengring 20, wobei der Gehäusedeckel 17 lediglich als Ausschnitt dargestellt ist. In dieser Figur ist eine alternative Ausführungsform des Sprengringes 20 mit entsprechend geänderter Bauweise des Gehäusedeckels 17 und Außenrings 19 dargestellt. Im Unterschied zur Ausführungsform gemäß Figur 3 handelt es sich bei diesem Sprengring 20 um ein Stahlblech mit im Wesentlichen rechteckigem Querschnitt über der Umfangsrichtung, wenngleich der Querschnitt wie bei einem Sprengring 20 üblich nicht konstant, sondern veränderlich ist. Es kann hier beispielsweise ein Stanzteil, das aus einem flachen Blech gestanzt wurde, zum Einsatz gelangen. Die Bezeichnungen der Einzelteile sind im Wesentlichen gleich gewählt wie in Fig. 3 bzw. 4. Die Funktionsweise ist ansonsten im Wesentlichen gleich der Darstellung des Ausführungsbeispiels der Figuren 3 und 4. In Figur 6 ist der Sprengring 20 als solcher noch einmal als Einzelteil dargestellt. Statt Ausbuchtungen 23 sind an dem Sprengring 20 hier Nasen 23a angeordnet, die statt in Ausnehmungen 28 in Durchbrüche 28a eingreifen können.

Aus Figur 6 ist der Sprengring 20 aus Figur 5 als Einzellteil ersichtlich, der eine einfachere Gestaltung als der Sprengrings 20 nach Figur 3 aufweist. In dieser Ausführungsform besteht der Sprengring 20 aus einem Formstahl ähnlich bekannter Sprengringe und ist damit kostengünstiger herstellbar.

### Bezugszeichenliste

| | |
|---|---|
| 1 | Brennkraftmaschine |
| 2 | Kolben |
| 3 | Pleuel |
| 4 | Kurbelwelle |
| 5 | Fahrzeugkupplung |
| 6 | Kupplungsscheibe |
| 7 | Getriebeeingangswelle |
| 8 | Kupplungsscheibe |
| 9 | Tellerfeder |
| 10 | Ausrücklager |
| 11 | Zentralausrücker |
| 12 | Kupplungsglocke |
| 13 | Ringkolben |
| 14 | Zylindergehäuse |
| 15 | Druckraum |
| 16 | Hydraulikanschluss |
| 17 | Gehäusedeckel |
| 18 | Lager |
| 19 | Außenring |
| 20 | Sprengring |
| 21 | Vorsprünge |
| 22 | Ausnehmungen |
| 23 | Ausbuchtungen |
| 23a | Nase |
| 24 | Abkantung |
| 25 | Auskantung |
| 26 | Abstandhalter |
| 27 | Kante |
| 28 | Ausnehmungen |
| 28a | Durchbruch |
| 29 | Bohrungen |
| 30 | Befestigungsmittel |
| 31 | Ringnut |
| 32 | Aufnahmebohrung |
| 33 | Aufnahmeöffnung |
| 34 | Getriebe |
| 35 | Kupplungsdeckel |
| 36 | Befestigungslaschen |

## Patentansprüche

1. Anbindung eines Zentralausrückers (11) an eine Kupplung bzw. einen Gehäusedeckel (17) einer Kupplung, bestehend aus einem drehbaren Außenring (19) eines am Zentralausrücker (11) angeordneten Lagers (18) und einem Gehäusedeckel (17), bei dem Außenring (19) und Gehäusedeckel (17) mittels bajonettartigem Verschluss miteinander verbunden sind, **dadurch gekennzeichnet, dass** in den Verschlussbereich beider zu verbindender Bauteile, Gehäusedeckel (17) und Außenring (19), ein Sprengring (20) eingefügt wird.

2. Anbindung nach Anspruch 1, **dadurch gekennzeichnet, dass** Gehäusedeckel (17) oder Außenring (19) mit Ausbuchtungen in axialer Richtung versehen sind.

3. Anbindung nach Anspruch 1, **dadurch gekennzeichnet, dass** Gehäusedeckel (17) oder Außenring (19) mit Ausbuchtungen oder Durchbrüchen in axialer Richtung versehen sind.

4. Anbindung nach Anspruch 1, **dadurch gekennzeichnet, dass** der Sprengring (20) Mittel (23, 23a) zur Verdrehsicherung gegenüber dem Gehäusedeckel (17) aufweist.

5. Anbindung nach Anspruch 1 und 4, **dadurch gekennzeichnet, dass** der Sprengring (20) einen im Wesentlichen rechteckigen Querschnitt aufweist, dessen größte Ausdehnung sich in radialer Richtung erstreckt.

6. Anbindung nach Anspruch 4, **dadurch gekennzeichnet, dass** zur Verdrehsicherung der Sprengring (20) mit mindestens einer als Nase (23a) ausgebildeten Ausbuchtung (23) versehen ist.

7. Anbindung nach Anspruch 6, **dadurch gekennzeichnet, dass** die Nasen (23a) im Wesentlichen in radialer Richtung nach außen zeigend an dem Sprengring (20) angeordnet sind.

8. Anbindung nach Anspruch 1, **dadurch gekennzeichnet, dass** der Sprengring (20) in einer Ringnut (31) des Gehäusedeckels (17) angeordnet ist.

9. Anbindung nach Anspruch 1, **dadurch gekennzeichnet, dass** der Sprengring (20) einen in etwa kreisförmigen Querschnitt aufweist.

10. Anbindung nach Anspruch 6 oder 7, **dadurch gekennzeichnet, dass** die Nasen (23a) oder Ausbuchtungen (23) in Ausnehmungen (28) oder Durchbrüche (28a) des Gehäusedeckels (17) eingreifen.

11. Anbindung nach Anspruch 1, **dadurch gekennzeichnet, dass** der Sprengring (20) an einem Umfangsende eine L-förmige Abkantung (24) aufweist.

12. Anbindung nach Anspruch 1, **dadurch gekennzeichnet, dass** der Sprengring (20) an einem Umfangsende eine Auskantung (25) aufweist.

13. Anbindung nach Anspruch 1 und 12, **dadurch gekennzeichnet, dass** die Auskantung (25) des Sprengringes (20) in Einbaulage eine Kante (27) eines Vorsprunges (21) des Außenrings (19) hintergreift.

14. Anbindung nach Anspruch 1, **dadurch gekennzeichnet, dass** der Sprengringes (20) aus einem elastischen Material besteht, das metallisch oder nichtmetallisch sein kann.

15. Verfahren zur Montage der Anbindung nach den Ansprüchen 1 bis 14 **gekennzeichnet durch** folgende Schritte:
a) Einlegen des Sprengrings (20) in die Ringnut (31) einer Aufnahmeöffnung (32) des Gehäusedeckels (17),
b) danach Einstecken des Außenring (19) des Lagers (18) in axialer Richtung in die Aufnahmeöffnung (32)
c) Verdrehen des Außenrings (19) gegenüber dem Gehäusedeckel (17) soweit, bis die Auskantung (25) des Sprengringes (20) die Kante (27) eines Vorsprunges (21) des Außenrings (19) hintergreift.

16. Verfahren zur Demontage der Anbindung nach den Ansprüchen 1 bis 14 **gekennzeichnet durch** folgende Schritte:
a. Eindrücken der Auskantung (25) des Sprengrings (20) in axialer Richtung so weit, bis dieser den Vorsprung (21) wieder verlässt,
b. Verdrehen des Außenrings (19) des Lagers (18) gegenüber dem Gehäusedeckel (17) in umgekehrter Richtung ,
c. Entnahme des Zentralausrückers (11) in axialer Richtung aus dem Verschlussbereich des Gehäusedeckels (17).

## Claims

1. Connection of a central release device (11) to a clutch or to a housing cover (17) of a clutch, composed of a rotatable outer ring (19) of a bearing (18) arranged on the central release device (11) and composed of a housing cover (17), wherein the outer ring (19) and housing cover (17) are connected to one another by means of a bayonet-like fastener, **characterized in that** a circlip (20) is inserted into the fastener region of the two components, housing cover (17) and outer ring (19), to be connected.

2. Connection according to Claim 1, **characterized in that** the housing cover (17) or outer ring (19) is provided with bulges in the axial direction.

3. Connection according to Claim 1, **characterized in that** the housing cover (17) or outer ring (19) is provided with bulges or apertures in the axial direction.

4. Connection according to Claim 1, **characterized in that** the circlip (20) has means (23, 23a) for twist prevention with respect to the housing cover (17).

5. Connection according to Claims 1 and 4, **characterized in that** the circlip (20) has a substantially rectangular cross section, the largest extent of which extends in the radial direction.

6. Connection according to Claim 4, **characterized in that**, for twist prevention, the circlip (20) is provided with at least one bulge (23) formed as a lug (23a).

7. Connection according to Claim 6, **characterized in that** the lugs (23a) are arranged on the circlip (20) so as to point substantially outward in the radial direction.

8. Connection according to Claim 1, **characterized in that** the circlip (20) is arranged in an annular groove (31) of the housing cover (17).

9. Connection according to Claim 1, **characterized in that** the circlip (20) has an approximately circular cross section.

10. Connection according to Claim 6 or 7, **characterized in that** the lugs (23a) or bulges (23) engage in recesses (28) or apertures (28a) of the housing cover (17).

11. Connection according to Claim 1, **characterized in that** the circlip (20) has an L-shaped bent-away portion (24) on one circumferential end.

12. Connection according to Claim 1, **characterized in that** the circlip (20) has a bent-out portion (25) on one circumferential end.

13. Connection according to Claims 1 and 12, **characterized in that** the bent-out portion (25) of the circlip (20) engages, in the installed position, behind an edge (27) of a projection (21) of the outer ring (19).

14. Connection according to Claim 1, **characterized in that** the circlip (20) is composed of an elastic material, which may be metallic or non-metallic.

15. Method for assembling the connection according to Claims 1 to 14, **characterized by** the following steps:
a) inserting the circlip (20) into the annular groove (31) of a receiving opening (32) of the housing cover (17),
b) subsequently inserting the outer ring (19) of the bearing (18) into the receiving opening (32) in the axial direction,
c) rotating the outer ring (19) relative to the housing cover (17) until the bent-out portion (25) of the circlip (20) engages behind the edge (27) of a projection (21) of the outer ring (19).

16. Method for disassembling the connection according to Claims 1 to 14, **characterized by** the following steps:
a. pushing the bent-out portion (25) of the circlip (20) in the axial direction until it moves away from the projection (21) again,
b. rotating the outer ring (19) of the bearing (18) relative to the housing cover (17) in the reverse direction,
c. removing the central release device (11) from the fastener region of the housing cover (17) in the axial direction.

## Revendications

1. Raccord d'un dispositif de débrayage central (11) sur un embrayage ou un couvercle de carter (17) d'un embrayage, constitué d'une bague extérieure rotative (19) d'un palier (18) disposé sur le dispositif de débrayage central (11) et d'un couvercle de carter (17), dans lequel la bague extérieure (19) et le couvercle de carter (17) sont connectés l'un à l'autre au moyen d'une fermeture de type à baïonnette, **caractérisé en ce que** dans la région de fermeture des deux composants à connecter, le couvercle de carter (17) et la bague extérieure (19) est inséré un jonc (20).

2. Raccord selon la revendication 1, **caractérisé en ce que** le couvercle de carter (17) ou la bague extérieure (19) est pourvu(e) de parties saillantes dans la direction axiale.

3. Raccord selon la revendication 1, **caractérisé en ce que** le couvercle de carter (17) ou la bague extérieure (19) est pourvu(e) de parties saillantes ou de perçages dans la direction axiale.

4. Raccord selon la revendication 1, **caractérisé en ce que** le jonc (20) présente des moyens (23, 23a) de solidarisation en rotation par rapport au couvercle de carter (17).

5. Raccord selon les revendications 1 et 4, **caractérisé en ce que** le jonc (20) présente une section transversale sensiblement rectangulaire, dont l'étendue maximale s'étend dans la direction radiale.

6. Raccord selon la revendication 4, **caractérisé en ce que** pour la solidarisation en rotation, le jonc (20) est pourvu d'au moins une partie saillante (23) réalisée sous forme de nez (23a).

7. Raccord selon la revendication 6, **caractérisé en ce que** les nez (23a) sont disposés de manière tournée vers l'extérieur essentiellement dans la direction radiale sur le jonc (20).

8. Raccord selon la revendication 1, **caractérisé en ce que** le jonc (20) est disposé dans une rainure annulaire (31) du couvercle de carter (17).

9. Raccord selon la revendication 1, **caractérisé en ce que** le jonc (20) présente une section transversale approximativement circulaire.

10. Raccord selon la revendication 6 ou 7, **caractérisé en ce que** les nez (23a) ou les parties saillantes (23) viennent en prise dans des évidements (28) ou des perçages (28a) du couvercle de carter (17).

11. Raccord selon la revendication 1, **caractérisé en ce que** le jonc (20) présente à une extrémité périphérique un rebord tombant en forme de L (24).

12. Raccord selon la revendication 1, **caractérisé en ce que** le jonc (20) présente à une extrémité périphérique un rebord saillant (25).

13. Raccord selon les revendications 1 et 12, **caractérisé en ce que** le rebord saillant (25) du jonc (20) vient en prise par l'arrière dans la position de raccord avec une arête (27) d'une saillie (21) de la bague extérieure (19).

14. Raccord selon la revendication 1, **caractérisé en ce que** le jonc (20) se compose d'un matériau élastique qui peut être métallique ou non métallique.

15. Procédé de montage du raccord selon les revendications 1 à 14, **caractérisé par** les étapes suivantes :
a) insertion du jonc (20) dans la rainure annulaire (31) d'une ouverture de réception (32) du couvercle de carter (17),
b) enfichage subséquent de la bague extérieure (19) du palier (18) dans la direction axiale dans l'ouverture de réception (32),
c) rotation de la bague extérieure (19) par rapport au couvercle de carter (17) jusqu'à ce que le rebord saillant (25) du jonc (20) vienne en prise par l'arrière avec l'arête (27) d'une saillie (21) de la bague extérieure (19).

16. Procédé de démontage du raccord selon les revendications 1 à 14, **caractérisé par** les étapes suivantes :
a) enfoncement du rebord saillant (25) du jonc (20) dans la direction axiale jusqu'à ce que celui-ci se détache à nouveau de la saillie (21),
b) rotation de la bague extérieure (19) du palier (18) par rapport au couvercle de carter (17) dans le sens inverse,
c) enlèvement du dispositif de débrayage central (11) dans la direction axiale hors de la région de fermeture du couvercle de carter (17).
